# FASCICULE DE BREVET EUROPEEN

(11) **EP 4 581 288 B1**
(45) Date de publication et mention de la délivrance du brevet: **21.10.2026**
(21) Numéro de dépôt: 23739628.8
(22) Date de dépôt: 19.06.2023
(51) Int. Cl.: F16H 61/682, F16H 63/50

(54) **PROCÉDÉ D'INHIBITION DE FONCTIONS DE CONTRÔLE DE COUPLE D'UN MOTEUR THERMIQUE LORS D'UN CHANGEMENT DE RAPPORT DE VITESSE AVORTÉ**
VERFAHREN ZUR HEMMUNG VON DREHMOMENTSTEUERFUNKTIONEN EINER WÄRMEKRAFTMASCHINE WÄHREND EINES ABBRECHENDEN GANGWECHSELS
METHOD FOR INHIBITING TORQUE CONTROL FUNCTIONS OF A HEAT ENGINE DURING AN ABORTED GEAR-SHIFT

(30) Priorité: 29.08.2022 FR 2208615
(43) Date de publication de la demande: 09.07.2025
(73) Titulaire: Stellantis Auto SAS, 78300 Poissy (FR)
(72) Inventeur: CHOPARD, Claude, 25750 ARCEY (FR); BILLER, David, 90400 MOVAL (FR); EL HAILA, Rajae, BOUSKOURA, 25100 (MA); GHILARDI, Quentin, 25200 MONTBELIARD (FR); ESTIOT, Victor, 25600 NOMMAY (FR)
(74) Mandataire: PSIP
(86) Numéro de dépôt international: PCT/FR2023/050898
(87) Numéro de publication internationale: WO 2024/047292

(56) Documents cités:
- EP-A1- 2 096 334
- EP-A1- 3 312 036
- FR-A1- 3 074 534

## Description

La présente invention porte sur un procédé d'inhibition de fonctions de contrôle de couple d'un moteur thermique lors d'un changement de rapport de vitesse avorté. L'invention trouve une application particulièrement avantageuse avec les véhicules automobiles munis d'un moteur à combustion interne et d'une boîte de vitesses manuelle.

Dans un véhicule automobile, la boîte de vitesses permet de transmettre la puissance générée par le moteur aux roues motrices du véhicule en démultipliant plus ou moins la vitesse de rotation d'un volant d'inertie du moteur lié mécaniquement au vilebrequin.

Dans le cas d'un véhicule à boîte de vitesses manuelle, la boîte de vitesses est reliée d'une part au volant d'inertie, via un premier arbre d'entrainement (appelé "arbre primaire") et un dispositif d'embrayage relié au volant d'inertie par un disque d'embrayage, et d'autre part aux roues motrices du véhicule, via un deuxième arbre d'entrainement (appelé "arbre secondaire") et un système de transmission. Le premier arbre primaire et le deuxième arbre secondaire sont reliés entre eux par une pluralité de pignons d'engrenage définissant une pluralité de rapports de transmission permettant de démultiplier le couple transmis par l'arbre primaire à l'arbre secondaire.

Lors d'un changement de rapport de vitesse par le conducteur, ce dernier relâche tout d'abord la pédale d'accélération et enfonce la pédale d'embrayage, ce qui a pour effet de désaccoupler le volant d'inertie du moteur et l'arbre primaire de la boîte de vitesses en écartant le disque d'embrayage du volant d'inertie. Le conducteur change ensuite de rapport de vitesse à l'aide du levier de vitesse en désengageant un rapport de vitesse initial puis en engageant un rapport de vitesse final. Le conducteur relâche ensuite la pédale d'embrayage tout en enfonçant de nouveau la pédale d'accélération.

Lorsque la pédale d'embrayage est relâchée, le disque d'embrayage entre à nouveau en contact avec le volant d'inertie dans une phase dite de "glissement", pendant laquelle le disque glisse sur le volant d'inertie, jusqu'à atteindre une position d'engagement (dite "de collage") dans laquelle le disque d'embrayage est solidaire du volant d'inertie en rotation. En d'autres termes, le couple de l'arbre primaire de la boîte de vitesses est égal au couple transmis par l'embrayage durant toute la phase de glissement puis égal au couple transmis par le moteur à l'embrayage lorsque la position d'engagement a été atteinte et que le dispositif d'embrayage est à l'état fermé.

Lors d'un changement de rapport de vitesse montant, il peut arriver que le couple du volant d'inertie commandé par la pédale d'accélération, c'est-à-dire par le conducteur, soit significativement inférieur au couple fourni par le disque d'embrayage. Une telle discontinuité de couple peut générer un choc suivi de rebonds dans le chaine de traction lors de l'engagement du disque d'embrayage avec le volant d'inertie. Afin de résoudre ce problème, il est connu de contrôler le moteur thermique de façon à augmenter le couple du volant d'inertie par rapport au couple demandé par le conducteur via le contrôle de la pédale d'accélération. Il est également connu de limiter le couple du volant d'inertie pendant un changement de rapport de vitesse montant dans le cas où le conducteur accélère de façon trop importante avant la fermeture de la chaîne de traction.

Toutefois, il a été observé que dans le cas d'un changement de rapport de vitesse avorté, c'est-à-dire un passage de rapport de vitesse allant d'un rapport initial N vers un rapport cible N (qui est le même que le rapport initial), un ajout ou une limitation de couple est perceptible à la roue. En effet, cela engendre un à-coup ou une chute de couple ressentie par le conducteur. Cette détérioration du confort de conduite peut être accompagnée d'une détérioration du confort acoustique.

En outre, l'état de la technique est connu du document FR3074534A1.

L'invention vise à remédier efficacement aux inconvénients précités en proposant un procédé de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, un rapport de vitesse initial étant engagé, ledit procédé comprenant:
- une étape de placement, par enfoncement d'une pédale d'embrayage, du disque d'embrayage dans une position de retrait par rapport au volant d'inertie,
- une étape de désengagement du rapport de vitesse initial,
- une étape d'engagement d'un rapport de vitesse cible de la boîte de vitesses à l'aide d'un levier de vitesse,
- une étape de déplacement, par relâchement progressif de la pédale d'embrayage, du disque d'embrayage vers une position d'engagement de manière à entrer dans une phase de glissement jusqu'à ce que le disque d'embrayage atteigne la position d'engagement sur le volant d'inertie,
ledit procédé comportant en outre:
- une étape de détection d'un probable changement de rapport de vitesse avorté à partir d'une analyse d'une phase d'activation d'une pédale de frein du véhicule par un conducteur, et
- une étape d'inhibition, pendant la phase de glissement du disque d'embrayage, d'une fonction d'ajout de couple ou d'une fonction de limitation de couple du volant d'inertie par rapport à un couple du volant d'inertie souhaité par le conducteur.

L'invention permet ainsi d'éviter une dégradation de l'agrément de conduite et/ou de l'agrément acoustique en cas d'activation à tort d'une stratégie d'ajout ou de limitation de couple lors d'une phase de changement de rapport avorté. L'invention permet en outre de mieux maîtriser la consommation de carburant et des émissions de particules polluantes du moteur thermique.

Selon une mise en œuvre de l'invention, un probable changement de rapport de vitesse avorté est détecté si une durée entre une fin de la phase d'activation de la pédale de frein et le désengagement du rapport de vitesse initial est inférieure à une durée d'une temporisation calibrable.

Selon une mise en œuvre de l'invention, un probable changement de rapport de vitesse avorté est détecté si la phase d'activation de la pédale de frein commence avant et finit après le désengagement du rapport de vitesse initial.

Selon une mise en œuvre de l'invention, un probable changement de rapport avorté est détecté si la phase d'activation de la pédale de frein se produit entre le désengagement du rapport de vitesse initial et l'engagement du rapport de vitesse cible.

Selon une mise en œuvre de l'invention, un probable changement de rapport avorté est détecté si la phase d'activation de la pédale de frein commence avant et finit après l'engagement du rapport de vitesse cible.

Selon une mise en œuvre de l'invention, le désengagement du rapport de vitesse initial et l'engagement du rapport de vitesse cible sont déterminés à l'aide d'une fonction d'estimation des rapports de vitesse.

L'invention a également pour objet un calculateur de contrôle d'un moteur de véhicule automobile à boîte de vitesses manuelle, ledit moteur comprenant un volant d'inertie relié à un arbre primaire de la boîte de vitesses via un dispositif d'embrayage, ledit dispositif d'embrayage comprenant un disque d'embrayage, ledit calculateur étant configuré pour détecter un probable changement de rapport de vitesse avorté à partir d'une analyse d'une phase d'activation d'une pédale de frein du véhicule par un conducteur, et pour inhiber une fonction d'ajout de couple ou une fonction de limitation de couple du volant d'inertie pendant la phase de glissement du disque d'embrayage.

L'invention concerne en outre un véhicule automobile comportant un calculateur tel que précédemment défini.

Selon une réalisation de l'invention, ledit véhicule comporte une boîte de vitesses manuelle.

Selon une réalisation de l'invention, la boîte de vitesses manuelle est dépourvue de capteur de grille permettant de détecter un rapport de vitesse engagé.

L'invention sera mieux comprise à la lecture de la description qui suit et à l'examen des figures qui l'accompagnent. Ces figures ne sont données qu'à titre illustratif mais nullement limitatif de l'invention.
[Fig. 1] La figure 1 est une représentation schématique d'un véhicule automobile mettant en œuvre le procédé selon l'invention d'inhibition de fonctions de contrôle de couple d'un moteur thermique lors d'un changement de rapport de vitesse avorté;
[Fig. 2] La figure 2 est un diagramme des étapes du procédé selon l'invention d'inhibition de fonctions de contrôle de couple d'un moteur thermique lors d'un changement de rapport de vitesse avorté;
[Fig. 3] La figure 3 est une représentation graphique illustrant différents cas d'inhibition ou non de fonctions de contrôle de couple suivant différentes phases d'activation d'une pédale de frein.

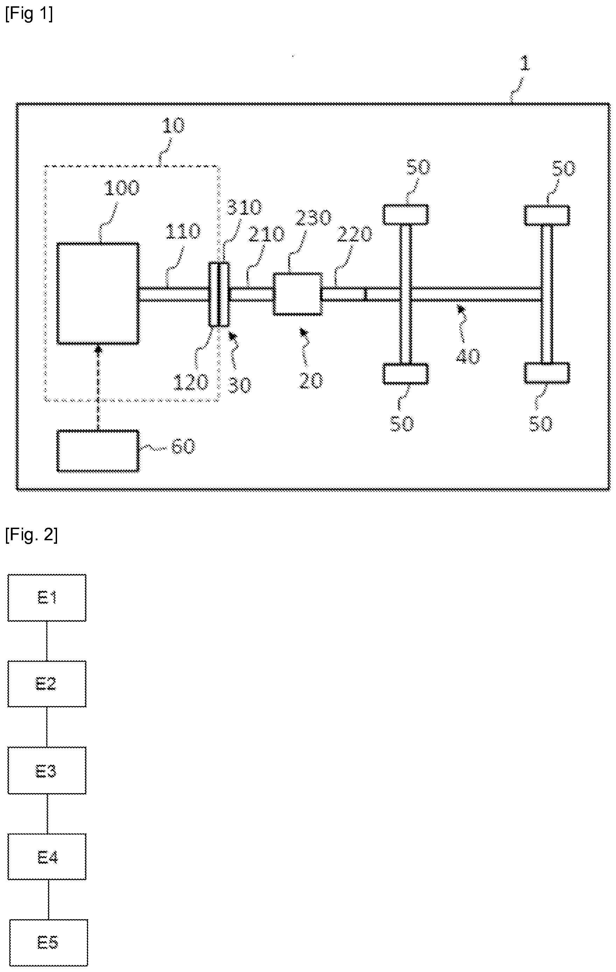

La figure 1 montre un véhicule 1 à moteur 10 thermique et à boîte de vitesses 20 manuelle. La boîte de vitesses 20 est dépourvue d'un capteur de grille permettant de détecter le rapport de vitesse engagé. Le véhicule 1 comprend également un dispositif d'embrayage 30, un système de transmission 40, une pluralité de roues 50 et un calculateur 60 de contrôle du moteur 10.

Le moteur 10 comprend un bloc moteur 100 comportant une pluralité de cylindres dans chacun desquels est brulé un mélange de carburant et d'air afin d'entrainer en rotation un vilebrequin 110 qui est monté de manière solidaire avec un volant d'inertie 120.

La boîte de vitesses 20 comprend un arbre primaire 210 et un arbre secondaire 220 reliés entre eux par une pluralité de pignons d'engrenage 230 permettant de démultiplier le couple transmis par l'arbre primaire 210 à l'arbre secondaire 220. La sélection du pignon, appelée rapport de vitesse, est réalisée par le conducteur (non représenté) du véhicule 1 à l'aide d'un levier de vitesses (non représenté).

Le dispositif d'embrayage 30 comprend un disque d'embrayage 310, monté de manière solidaire avec l'arbre primaire 210 de la boîte de vitesses 20. Un déplacement du disque d'embrayage 310 est commandé par une pédale d'embrayage actionnable par le conducteur du véhicule 1. Le disque d'embrayage 310 est apte à être déplacé entre une position de d'engagement du disque d'embrayage 310 avec le volant d'inertie 120, lorsque le conducteur n'appuie pas ou appuie peu sur la pédale d'embrayage (le dispositif d'embrayage 30 est alors à l'état fermé), et une position de retrait dans laquelle le volant d'inertie 120 n'est plus en contact avec le disque d'embrayage 310, lorsque le conducteur appuie suffisamment sur la pédale d'embrayage (le dispositif d'embrayage 30 est alors à l'état ouvert).

Lorsque le dispositif d'embrayage 30 est engagé avec le volant d'inertie 120 (i.e. lorsque le disque d'embrayage 310 est en position d'engagement), le couple généré par le moteur 10 est transmis à l'arbre primaire 210 via le vilebrequin 110 et le disque d'embrayage 310 puis démultiplier via les pignons d'engrenage 230 jusqu'à l'arbre secondaire 220 qui le transmet aux roues 50 via le système de transmission 40.

Lorsque le disque d'embrayage 310 se déplace d'une position de retrait vers la position d'engagement et entre en contact avec le volant d'inertie 120, le disque d'embrayage 310 glisse tout d'abord sur le volant d'inertie 120, dans une phase dite "de glissement", avant d'atteindre la position d'engagement. Ce cas de figure se produit notamment lorsque le conducteur relâche la pédale d'embrayage après un changement de rapport de vitesse.

Le calculateur 60 permet de contrôler le moteur 10, notamment les injections de carburant dans les cylindres du moteur 10. Le calculateur 60 est également apte à contrôler le couple du volant d'inertie 120 du moteur 10 lors d'un changement de rapport de vitesse.

Le calculateur 60 est apte à mettre en œuvre le procédé d'inhibition de fonctions de contrôle de couple du moteur 10 lors d'un changement de rapport de vitesse avorté. Ce procédé est décrit ci-après en référence avec la figure 2. Tout d'abord, dans une étape E1, lorsque le conducteur souhaite réaliser un passage de rapport de vitesse, il enfonce la pédale d'embrayage, ce qui a pour effet de placer le disque d'embrayage 310 dans une position de retrait par rapport au volant d'inertie 120.

Le conducteur effectue un changement de rapport de vitesse dans une étape E2. A cet effet, le conducteur désengage manuellement dans une étape un rapport de vitesse initial puis engage un rapport de vitesse cible à l'aide du levier de vitesse.

Dans une étape E3, le conducteur relâche progressivement la pédale d'embrayage dans le but de ré-embrayer le disque d'embrayage 310 avec le volant d'inertie 120. Ce faisant, le disque d'embrayage 310 se déplace tout d'abord vers la position d'engagement de manière à entrer dans une phase de glissement du disque d'embrayage 310 sur le volant d'inertie 120.

Dans une étape E4, le calculateur 60 détecte un probable changement de rapport de vitesse avorté à partir d'une analyse d'une phase d'activation d'une pédale de frein du véhicule par un conducteur. En effet, l'entité inventive a observé qu'un changement de rapport de vitesse avorté se produit le plus souvent lorsque le conducteur agit sur la pédale de frein du véhicule (par appui avec le pied sur cette pédale de frein) juste avant ou pendant un changement de rapport de vitesse. L'invention se base donc sur l'analyse de l'activation de la pédale de frein pour déterminer si l'on se trouve dans une phase probable d'un changement de rapport de vitesse avorté.

Dans une étape E5, dans le cas où un probable changement de rapport de vitesse avorté est détecté, le calculateur 60 inhibe, pendant la phase de glissement du disque d'embrayage 310, une fonction d'ajout de couple ou d'une fonction de limitation de couple visant respectivement à augmenter ou réduire un couple du volant d'inertie 120 par rapport à un couple du volant d'inertie 120 souhaité par le conducteur. Le couple du volant d'inertie 120 souhaité par le conducteur correspond à une volonté d'accélération déterminée à partir d'un enfoncement de la pédale d'accélération. Autrement dit, le calculateur 60 inhibe les fonctions de contrôle de couple au niveau du volant d'inertie 120 lors d'un changement de rapport avorté effectué manuellement par le conducteur.

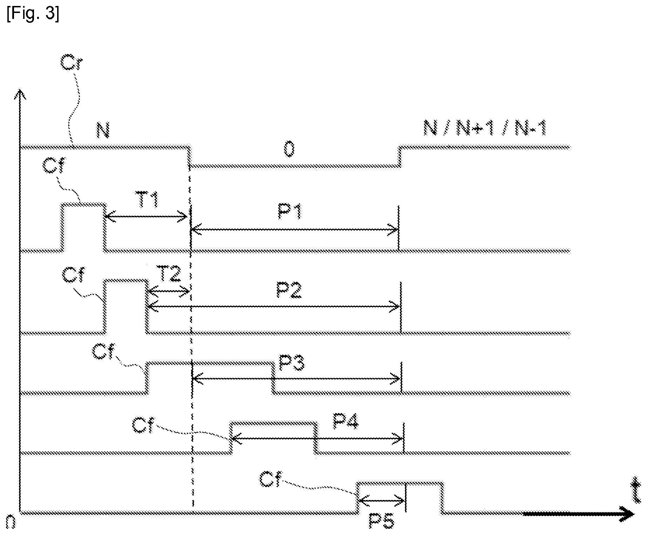

La figure 3 illustre différents cas d'inhibition ou non de fonctions de contrôle de couple du moteur thermique 10 suivant différentes phases d'activation de la pédale de frein. La courbe Cr correspond au rapport de vitesse en cours, N correspondant au rapport de vitesse initial, 0 au neutre, et N, N+1 ou N-1 correspondant au rapport cible. Les courbes Cf correspondent à différents cas d'activation de la pédale de frein lors du changement de rapport de vitesse.

Dans le cas où une durée T1 entre la fin de la phase d'activation de la pédale de frein et le désengagement du rapport de vitesse initial est supérieure à une durée de temporisation calibrable, alors il est possible de mettre en œuvre une fonction d'ajout ou de limitation de couple pendant la phase P1 allant du désengagement du rapport de vitesse initial à l'engagement du rapport de vitesse cible.

Dans le cas où la durée T2 entre une fin de la phase d'activation de la pédale de frein P_fr et le désengagement du rapport de vitesse initial est inférieure à une durée d'une temporisation calibrable, le calculateur 60 détecte un probable changement de rapport de vitesse avorté. Le calculateur 60 inhibe alors la fonction d'ajout ou de limitation de couple du volant d'inertie 120 pendant la phase P2 allant de la fin de la phase d'activation de la pédale de frein à l'engagement du rapport cible.

Dans le cas où la phase d'activation de la pédale de frein commence avant et finit après le désengagement du rapport de vitesse initial N, le calculateur 60 détecte un probable changement de rapport de vitesse avorté. Le calculateur 60 inhibe alors la fonction d'ajout ou de limitation de couple du volant d'inertie 120 pendant la phase P3 allant du désengagement du rapport de vitesse initial à l'engagement du rapport de vitesse cible.

Dans le cas où la phase d'activation de la pédale de frein se produit entre le désengagement du rapport de vitesse initial et l'engagement du rapport de vitesse cible, le calculateur 60 détecte un probable changement de rapport de vitesse avorté. Le calculateur 60 inhibe alors la fonction d'ajout ou de limitation de couple du volant d'inertie 120 pendant la phase P4 allant du début de la phase d'activation de la pédale de frein à l'engagement du rapport de vitesse cible.

Dans le cas où la phase d'activation de la pédale de frein commence avant et finit après l'engagement du rapport de vitesse cible, le calculateur 60 détecte un probable changement de rapport de vitesse avorté. Le calculateur 60 inhibe alors la fonction d'ajout ou de limitation de couple du volant d'inertie 120 pendant la phase P5 allant du début de la phase d'activation de la pédale de frein à l'engagement du rapport de vitesse cible.

La boîte de vitesses 20 étant dépourvue d'un capteur de grille pour des raisons d'économie, le désengagement du rapport de vitesse initial et l'engagement du rapport de vitesse cible sont déterminés à l'aide d'une fonction d'estimation des rapports de vitesse.

Il est possible que les phases de vie préalablement détectée ne mènent pas à un changement de rapport de vitesse avorté mais il est préférable de désactiver les fonctions d'ajout ou de limitation de couple du volant d'inertie 120 à tort plutôt que d'activer lesdites fonctions à tort. Autrement dit, la désactivation des fonctions d'ajout ou de limitation du couple prime sur leur activation.

## Revendications

1. Procédé de contrôle d'un moteur (10) de véhicule (1) à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), un rapport de vitesse initial étant engagé, ledit procédé comprenant:
- une étape de placement (E1), par enfoncement d'une pédale d'embrayage, du disque d'embrayage (310) dans une position de retrait par rapport au volant d'inertie (120),
- une étape de désengagement du rapport de vitesse initial,
- une étape d'engagement (E2) d'un rapport de vitesse cible de la boîte de vitesses (20) à l'aide d'un levier de vitesse,
- une étape de déplacement (E3), par relâchement progressif de la pédale d'embrayage, du disque d'embrayage (310) vers une position d'engagement de manière à entrer dans une phase de glissement jusqu'à ce que le disque d'embrayage (310) atteigne la position d'engagement sur le volant d'inertie (120), **caractérisé en ce que** ledit procédé comporte:
- une étape de détection (E4) d'un probable changement de rapport de vitesse avorté à partir d'une analyse d'une phase d'activation d'une pédale de frein du véhicule par un conducteur, et
- une étape d'inhibition (E5), pendant la phase de glissement du disque d'embrayage (310), d'une fonction d'ajout de couple ou d'une fonction de limitation de couple du volant d'inertie (120) par rapport à un couple du volant d'inertie (120) souhaité par le conducteur.

2. Procédé selon la revendication 1, **caractérisé en ce qu'**un probable changement de rapport de vitesse avorté est détecté si une durée entre une fin de la phase d'activation de la pédale de frein et le désengagement du rapport de vitesse initial est inférieure à une durée d'une temporisation calibrable.

3. Procédé selon la revendication 1 ou 2, **caractérisé en ce qu'**un probable changement de rapport de vitesse avorté est détecté si la phase d'activation de la pédale de frein commence avant et finit après le désengagement du rapport de vitesse initial.

4. Procédé selon l'une quelconque des revendications 1 à 3, **caractérisé en ce qu'**un probable changement de rapport avorté est détecté si la phase d'activation de la pédale de frein se produit entre le désengagement du rapport de vitesse initial et l'engagement du rapport de vitesse cible.

5. Procédé selon l'une quelconque des revendications 1 à 4, **caractérisé en ce qu'**un probable changement de rapport avorté est détecté si la phase d'activation de la pédale de frein commence avant et finit après l'engagement du rapport de vitesse cible.

6. Procédé selon l'une quelconque des revendications 1 à 5, **caractérisé en ce que** le désengagement du rapport de vitesse initial et l'engagement du rapport de vitesse cible sont déterminés à l'aide d'une fonction d'estimation des rapports de vitesse.

7. Calculateur (60) de contrôle d'un moteur (10) de véhicule (1) automobile à boîte de vitesses (20) manuelle, ledit moteur (10) comprenant un volant d'inertie (120) relié à un arbre primaire (210) de la boîte de vitesses (20) via un dispositif d'embrayage (30), ledit dispositif d'embrayage (30) comprenant un disque d'embrayage (310), ledit calculateur 60 étant configuré pour détecter un probable changement de rapport de vitesse avorté à partir d'une analyse d'une phase d'activation d'une pédale de frein du véhicule par un conducteur, et pour inhiber une fonction d'ajout de couple ou d'une fonction de limitation de couple du volant d'inertie pendant la phase de glissement du disque d'embrayage (310).

8. Véhicule automobile **caractérisé en ce qu'**il comporte un calculateur 60 défini selon la revendication 7.

9. Véhicule selon la revendication 8, **caractérisé en ce qu'**il comporte une boîte de vitesses manuelle.

10. Véhicule selon la revendication 9, **caractérisé en ce que** la boîte de vitesses manuelle est dépourvue de capteur de grille permettant de détecter un rapport de vitesse engagé.

## Patentansprüche

1. Verfahren zum Steuern eines Motors (10) eines Fahrzeugs (1) mit Handschaltgetriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, wobei ein Anfangsgangverhältnis eingeschaltet wird, wobei das Verfahren umfasst:
- einen Schritt des Verstellens (E1) der Kupplungsscheibe (310) in eine zurückgezogene Stellung relativ zum Schwungrad (120) durch Eindrücken eines Kupplungspedals,
- eine Phase des Ausrückens aus dem ursprünglichen Gang,
- einen Einrückschritt (E2) eines Sollübersetzungsverhältnisses des Getriebes (20) mittels eines Schalthebels,
- einen Bewegungsschritt (E3) durch allmähliches Lösen des Kupplungspedals von der Kupplungsscheibe (310) in eine Eingriffsposition, um in eine Schlupfphase einzutreten, bis die Kupplungsscheibe (310) die Eingriffsposition am Schwungrad (120) erreicht,
**dadurch gekennzeichnet, dass** das Verfahren umfasst:
- einen Schritt (E4) zur Ermittlung eines wahrscheinlichen fehlgeschlagenen Gangwechsels auf der Grundlage einer Analyse einer Phase der Betätigung eines Bremspedals des Fahrzeugs durch einen Fahrzeugführer und
- einen Schritt (E5), um während der Schlupfphase der Kupplungsscheibe (310) eine Drehmomentaddierfunktion oder eine Drehmomentbegrenzungsfunktion des Schwungrades (120) gegenüber einem vom Fahrer gewünschten Drehmoment des Schwungrades (120) zu sperren.

2. Verfahren nach Anspruch 1, **dadurch gekennzeichnet, dass** eine wahrscheinliche abgebrochene Gangänderung erfasst wird, wenn eine Zeitdauer zwischen einem Ende der Bremspedalaktivierungsphase und dem Ausrücken des Anfangsgangverhältnisses kleiner als eine Zeitdauer einer kalibrierbaren Verzögerung ist.

3. Verfahren nach Anspruch 1 oder 2, **dadurch gekennzeichnet, dass** eine wahrscheinliche abgebrochene Gangänderung erfasst wird, wenn die Betätigungsphase des Bremspedals vor und nach dem Lösen des Anfangsgetriebes beginnt.

4. Verfahren nach einem der Ansprüche 1 bis 3, **dadurch gekennzeichnet, dass** eine wahrscheinliche abgebrochene Gangänderung erfasst wird, wenn die Bremspedalaktivierungsphase zwischen dem Ausrücken des Anfangsgetriebes und dem Einrücken des Zielgetriebes auftritt.

5. Verfahren nach einem der Ansprüche 1 bis 4, **dadurch gekennzeichnet, dass** eine wahrscheinliche abgebrochene Gangänderung erfasst wird, wenn die Betätigungsphase des Bremspedals vor und nach dem Einlegen des Zielgangverhältnisses beginnt.

6. Verfahren nach einem der Ansprüche 1 bis 5, **dadurch gekennzeichnet, dass** das Ausrücken des Anfangsgetriebes und das Einrücken des Zielgetriebes mithilfe einer Funktion zur Schätzung der Getriebeübersetzungen bestimmt werden.

7. Steuerungsrechner (60) für einen Motor (10) eines Kraftfahrzeugs (1) mit manuellem Getriebe (20), wobei der Motor (10) ein Schwungrad (120) aufweist, das über eine Kupplungsvorrichtung (30) mit einer Primärwelle (210) des Getriebes (20) verbunden ist, wobei die Kupplungsvorrichtung (30) eine Kupplungsscheibe (310) aufweist, wobei der Rechner (60) so konfiguriert ist, dass er eine wahrscheinliche abgebrochene Gangänderung aus einer Analyse einer Phase erfasst Zur Aktivierung eines Bremspedals des Fahrzeuges durch einen Fahrer und zur Unterdrückung einer Drehmomentaddierfunktion oder einer Drehmomentbegrenzungsfunktion des Schwungrades während der Schlupfphase der Kupplungsscheibe (310).

8. Kraftfahrzeug, **dadurch gekennzeichnet, dass** es einen nach Anspruch 7 definierten Rechner 60 aufweist.

9. Kraftfahrzeug nach Anspruch 8, **dadurch gekennzeichnet, dass** es ein Handschaltgetriebe aufweist.

10. Kraftfahrzeug nach Anspruch 9, **dadurch gekennzeichnet, dass** das Handschaltgetriebe ohne Gittersensor zum Erfassen eines eingelegten Gangverhältnisses ausgebildet ist.

## Claims

1. Method of controlling an engine (10) of a vehicle (1) having a manual transmission (20), the engine (10) having a flywheel (120) connected via a clutch device (30) to a primary shaft (210) of the transmission (20), the clutch device (30) having a clutch disk (310), wherein an initial gear ratio is engaged, the method comprising:
- a step of adjusting (E1) the clutch disk (310) to a retracted position relative to the flywheel (120) by pressing in a clutch pedal,
- a phase of disengagement from the initial gear,
- an engagement step (E2) of a desired transmission ratio of the transmission (20) by means of a shift lever,
- a movement step (E3) by gradually releasing the clutch pedal from the clutch disk (310) into an engaged position to enter a slip phase until the clutch disk (310) reaches the engaged position on the flywheel (120),
**characterized in that** the method comprises:
- a step (E4) for determining a likely failed gear change based on an analysis of a phase of actuation of a brake pedal of the vehicle by a driver, and
- a step (E5) for locking, during the slip phase of the clutch disk (310), a torque adding function or a torque limiting function of the flywheel (120) relative to a torque of the flywheel (120) desired by the driver.

2. Method according to claim 1, **characterized in that** a probable aborted gear change is detected when a period of time between an end of the brake pedal activation phase and the disengagement of the initial gear ratio is less than a period of time of a calibratable deceleration.

3. Method according to Claim 1 or 2, **characterized in that** a probable aborted gear change is detected when the actuating phase of the brake pedal begins before and after the release of the initial transmission.

4. Method according to one of Claims 1 to 3, **characterized in that** a probable aborted change of gear is detected when the brake pedal activation phase occurs between the disengagement of the initial transmission and the engagement of the target transmission.

5. Method according to one of Claims 1 to 4, **characterized in that** a probable aborted gear change is detected when the actuating phase of the brake pedal begins before and after the engagement of the target gear ratio.

6. Method according to one of Claims 1 to 5, **characterized in that** the disengagement of the initial gearbox and the engagement of the target gearbox are determined by means of a function for estimating the gearbox ratios.

7. Control computer (60) for an engine (10) of a motor vehicle (1) having a manual transmission (20), the engine (10) comprising a flywheel (120) connected to a primary shaft (210) of the transmission (20) via a clutch device (30), the clutch device (30) comprising a clutch disk (310), the computer (60) being configured to detect a probable aborted gear change from an analysis of a phase for activating a brake pedal of the vehicle by a driver and for suppressing a torque addition function or a torque limiting function of the flywheel during the slip phase of the clutch disk (310).

8. Motor vehicle, **characterized in that** it comprises a computer 60 as defined in claim 7.

9. Motor vehicle according to Claim 8, **characterized in that** it has a manual gearbox.

10. Motor vehicle according to Claim 9, **characterized in that** the manual gearbox is designed without a grid sensor for detecting an engaged gear ratio.
